Europäisches Patentamt

European Patent Office

Office européen des brevets

(11) Numéro de publication: **0 321 048 B1**

(12) **FASCICULE DE BREVET EUROPEEN**

(45) Date de publication de fascicule du brevet: **02.03.94**

(51) Int. Cl.⁵: **G01S 17/87**, G01S 7/48, H01S 3/23

(21) Numéro de dépôt: **88202859.0**

(22) Date de dépôt: **13.12.88**

(54) **Illuminateur de forte puissance pour caméra.**

(30) Priorité: **18.12.87 FR 8717714**

(43) Date de publication de la demande:
**21.06.89 Bulletin 89/25**

(45) Mention de la délivrance du brevet:
**02.03.94 Bulletin 94/09**

(84) Etats contractants désignés:
**DE FR GB IT NL**

(56) Documents cités:
**FR-A- 2 186 658**
**FR-A- 2 578 691**
**US-A- 4 217 558**

**PATENT ABSTRACTS OF JAPAN, vol. 5, no. 44 (E-50)[716], 24 mars 1981; & JP-A-55 166 984 (MATSUSHITA DENKI SANGYO K.K.) 26-12-1980**

(73) Titulaire: **SOCIETE ANONYME D'ETUDES ET REALISATIONS NUCLEAIRES S.O.D.E.R.N.**
**1, avenue Descartes**
**F-94450 Limeil-Brevannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB IT NL**

(72) Inventeur: **Bourcier, Henri**
**Société Civile S.P.I.D.**
**209, rue de l'Université**
**F-75007 Paris(FR)**
Inventeur: **Turon Lacarrieu, Pierre**
**Société Civile S.P.I.D.**
**209, rue de l'Université**
**F-75007 Paris(FR)**

(74) Mandataire: **Charpail, François et al**
**Société Civile S.P.I.D.**
**156, Boulevard Haussmann**
**F-75008 Paris (FR)**

EP 0 321 048 B1

# Description

L'invention concerne une caméra intégrant un dispositif illuminateur de forte puissance pour effectuer des mesures de direction, de distance et d'attitude relative entre deux objets dont l'un d'entre eux est équipé dudit dispositif, ladite caméra formant l'image de l'autre objet sur un détecteur à travers une optique d'entrée et un filtre optique de bande spectrale déterminée, ledit dispositif étant constitué de plusieurs sources élémentaires comportant chacune une optique de collimation pour ajuster le champ de vue de chacune desdites sources à celui de l'optique d'entrée de la caméra.

Un dispositif de ce genre trouve une application par exemple dans les approches de rendez-vous entre deux véhicules spatiaux dont l'un appelé "chasseur" cherche à rejoindre l'autre appelé "cible".

Il faut qu'à l'instant de la jonction, le couplage des deux véhicules puisse se faire avec le choc mécanique le plus faible possible de façon à ne pas trop modifier les conditions orbitales de la cible.

A cet effet, le chasseur doit prendre en compte suffisamment tôt l'orbite théorique de la cible pour aborder celle-ci avec la bonne vitesse et surtout avec la bonne attitude.

Cela nécessite un équipement placé dans le véhicule chasseur et qui mesure la distance entre chasseur et cible (pour l'approche finale, on peut se placer par exemple à 200 m), la direction de la cible dans le repère du chasseur et l'attitude de la cible par rapport au même repère chasseur.

Cet équipement est constitué par une caméra munie d'un émetteur de lumière qui émet suivant le même axe et dans le même champ que celui de la caméra un certain cône de lumière projeté sur la cible où l'on a disposé des rétroflecteurs, c'est-à-dire des petits miroirs à trois faces (ou coins cube) qui renvoient le faisceau réfléchi suivant la direction du faisceau incident quelle que soit la position qu'ils occupent dans l'espace.

Les diodes laser utilisées habituellement comme émetteur de lumière nécessitent une optique de collimation pour adapter l'angle du cône d'émission au champ de vue de la caméra.

Dans le cas d'application au rendez-vous spatial entre deux véhicules, il faut un émetteur suffisamment puissant pour que le flux lumineux provenant des rétroflecteurs et qui vient frapper la caméra soit supérieur à celui émis par le soleil.

On doit donc mettre en oeuvre l'émission de plusieurs sources élémentaires comportant chacune une diode laser et une optique de collimation pour augmenter notablement la puissance de l'émetteur. La disposition de ces sources dans un espace très réduit s'avère alors délicate à réaliser pour obtenir une émission de lumière à l'intérieur d'un même cône.

Le but de l'invention est de pallier cette difficulté au moyen d'un dispositif assurant le couplage de plusieurs sources élémentaires et permettant la modulation de la forte puissance d'émission ainsi réalisée et l'obtention d'une auto-redondance en cas de panne d'une ou de plusieurs de ces sources.

A cet effet le dispositif de l'invention est remarquable en ce que lesdites sources élémentaires se trouvent régulièrement réparties en couronne autour de la pupille de ladite optique d'entrée, le faisceau lumineux issu de l'optique de collimation de chacune desdites sources étant focalisé par l'intermédiaire d'un miroir de renvoi disposé en vis-à-vis de chaque source sur un miroir à facettes entourant ladite pupille de l'optique d'entrée et comportant autant de facettes que de sources lumineuses, chaque facette étant inclinée d'un angle tel que la direction du faisceau réfléchi est colinéaire avec la direction du champ de vue de la caméra, de telle façon que les faisceaux lumineux issus desdites facettes de miroir soient quasiment superposables tout autour de l'axe optique de la caméra.

La description suivante en regard des dessins annexés, le tout donné à titre d'exemple, fera bien comprendre comment l'invention peut être réalisée.

La figure 1 montre le schéma de principe du dispositif de mesure.

La figure 2 représente une coupe longitudinale de l'illuminateur de l'invention associé à la caméra.

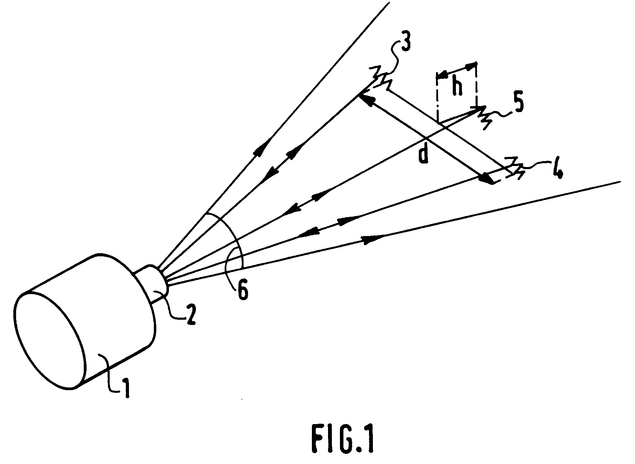

Les mesures de distance, de direction et d'attitude relative entre deux objets peuvent être réalisées au moyen du dispositif dont la figure 1 donne le principe.

Sur l'un des objets se trouve la caméra 1 équipée de son illuminateur 2 et sur l'autre se trouvent répartis trois motifs de rétroréflecteurs non coplanaires 3, 4 et 5 dans le cône d'émission 6 de l'illuminateur.

Les parties des faisceaux renvoyés sur eux-mêmes par les motifs rétroréflecteurs sont indiquées par des traits sur lesquels on a placé des flèches de directions opposées.

Les motifs 3 et 4 sont séparés d'une distance d.

Le motif 5 est décalé de h par rapport aux motifs 3 et 4.

La caméra mesure la direction angulaire des motifs 3, 4 et 5.

L'information angulaire du point milieu fournie par

$$\frac{Pos(3)+Pos(4)}{2}$$

donne la direction du motif donc la direction de l'objet sur lequel se trouvent les motifs de rétroréflecteurs.

La mesure de l'angle sous lequel est vue la distance d depuis la caméra permet de fournir la distance caméra-motifs de rétroréflecteurs.

L'écart de position angulaire entre le motif 5 et le point virtuel milieu de la distance d séparant les motifs 3 et 4 permet de déterminer l'attitude relative entre les deux objets.

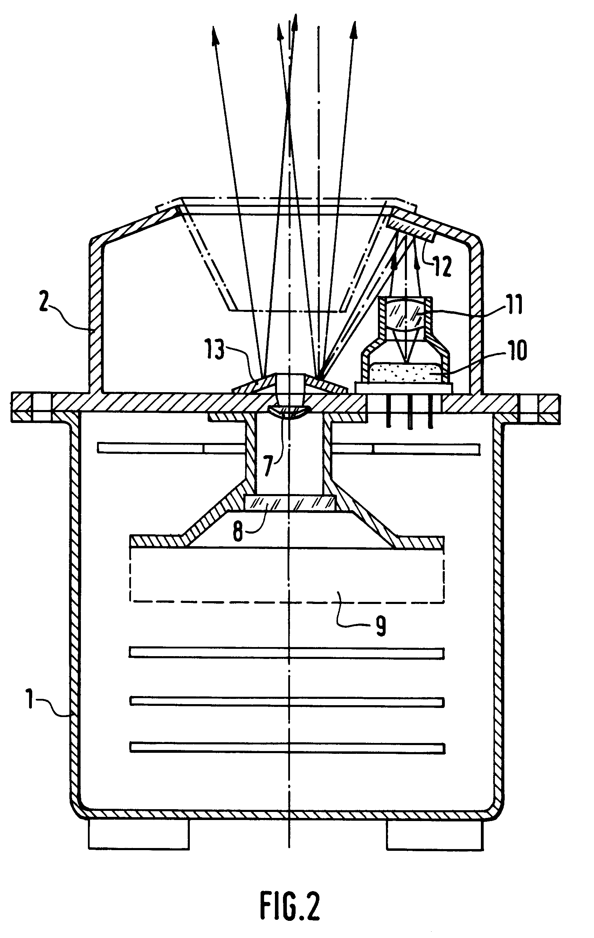

Une coupe longitudinale du dispositif illuminateur de l'invention est schématisé sur la figure 2 qui représente la tête optique d'une caméra de rendez-vous spatiale.

L'optique d'entrée de la caméra proprement dite 1 comporte la pupille d'entrée 7 et le filtre optique 8 qui focalisent l'image de la scène sur un détecteur 9 consistant par exemple en un dispositif CCD maintenu à 20°±3° par effet Peltier.

A l'avant de la caméra 1 se trouve le dispositif illuminateur de l'invention 2 dont le principe consiste à focaliser les images des surfaces émissives d'un ensemble de diodes laser sur un miroir à facettes concentriques à l'optique de la caméra. Ce principe d'association a l'avantage d'éviter toute diffusion de lumière directe dans ladite optique de la caméra.

Le dispositif conforme à l'invention comporte N sources élémentaires (diode laser continue ou diode laser pulsée 10) réparties en couronne autour de la pupille d'entrée 7 de l'optique de la caméra. Une optique de collimation 11 par source élémentaire permet d'ajuster le champ de vue d'émission de lumière à celui désiré, (le même pour toutes les sources élémentaires). Le faisceau lumineux issu de l'optique de collimation 11 est focalisé par l'intermédiaire d'un miroir de renvoi 12 disposé en vis-à-vis de chaque source sur un miroir à N facettes 13 entourant la pupille d'entrée 7 de la caméra. Chaque facette de ce miroir est convenablement inclinée pour renvoyer le faisceau de la source élémentaire correspondante dans une direction colinéaire avec la direction du champ de vue de la caméra.

Les faisceaux d'émission sont ainsi quasiment concentriques à l'axe optique de la caméra.

De plus aucun faisceau de forte puissance lumineuse ne tombe sur les composants optiques (pupille d'entrée, filtre) ou ne les traverse dans le trajet du champ de vue de la caméra, ce qui diminue les risques de diffusion et donc les risques d'injection directe de lumière parasite.

Enfin la modulation du niveau d'émission se trouve facilitée par l'utilisation de 1 à N sources élémentaires.

L'intérêt de ce dispositif d'illumination est de permettre d'engendrer de forts flux qui assurent le bon fonctionnement de la caméra, même dans une atmosphère très brillante (soleil dans le champ de vue pour une application de rendez-vous spatial ou environnement très lumineux pour des applications de robotique).

**Revendications**

1. Caméra intégrant un dispositif illuminateur de forte puissance pour effectuer des mesures de direction, de distance et d'attitude relative entre deux objets dont l'un d'entre eux est équipé dudit dispositif, ladite caméra formant l'image de l'autre objet sur un détecteur à travers une optique d'entrée et un filtre optique de bande spectrale déterminée, ledit dispositif étant constitué de plusieurs sources élémentaires comportant chacune une optique de collimation pour ajuster le champ de vue de chacune desdites sources à celui de l'optique d'entrée de la caméra, caractérisé en ce que lesdites sources élémentaires se trouvent régulièrement réparties en couronne autour de la pupille de ladite optique d'entrée, le faisceau lumineux issu de l'optique de collimation de chacune desdites sources étant focalisé par l'intermédiaire d'un miroir de renvoi disposé en vis-à-vis de chaque source sur un miroir à facettes entourant ladite pupille de l'optique d'entrée et comportant autant de facettes que de sources lumineuses, chaque facette étant inclinée d'un angle tel que la direction du faisceau réfléchi est colinéaire avec la direction du champ de vue de la caméra, de telle façon que les faisceaux lumineux issus desdites facettes de miroir soient quasiment superposables tout autour de l'axe optique de la caméra.

2. Caméra selon la revendication 1, caractérisé en ce que lesdites sources élémentaires sont constituées par des diodes laser continues ou par des diodes laser pulsées.

3. Caméra selon les revendications 1 et 2, caractérisé en ce qu'aucun faisceau issu desdites sources élémentaires ne traverse l'optique d'entrée de la caméra.

4. Caméra selon les revendications 1 à 3, caractérisé en ce que le niveau d'illumination peut être modulé par l'utilisation de 1 à N sources élémentaires.

**Claims**

1. A camera integrating a high-power illumination device for measuring the direction, distance and attitude of two objects relative to each other, whilst one of said objects carries the device, which camera images the other object on a detector via an input-optical system and an optical filter having a given spectral band, said device comprising a plurality of elementary sources each having an optical collimation system for adjusting the field of view of each source to that of the input-optical system of the camera, characterized in that said elementary sources are regularly spaced in a ring configuration around the pupil of said input-optical system, the light beam from the optical collimation system of each source being focused via a deflecting mirror arranged opposite each source onto a facet mirror surrounding the pupil of the input-optical system and comprising as many facets as there are light sources, each facet being inclined so as to align the direction of the reflected beam with the direction of the field of view of the camera in such a way that the light beams from said mirror facets are quasi-superimposed all around the optical axis of the camera.

2. A camera as claimed in Claim 1, characterized in that said elementary sources comprise continuous wave laser diodes or pulsed laser diodes.

3. A camera as claimed in Claims 1 and 2, characterized in that none of the beams emitted by said elementary sources traverses the input-optical system of the camera.

4. A camera as claimed in Claims 1 to 3, characterized in that the illumination level can be modulated by using 1 to N elementary sources.

**Patentansprüche**

1. Kamera mit integrierter Hochleistungsbeleuchtungsvorrichtung, zum Ausführen von Messungen der Richtung, des Abstandes und der relativen Lage zweier Objekte zueinander, von denen eines mit der genannten Vorrichtung ausgerüstet ist, wobei die Kamera das andere Objekt durch eine Eingangsoptik und ein optisches Filter für einen bestimmten Spektralbereich hindurch auf einen Detektor abbildet, und die Vorrichtung aus mehreren Elementarquellen mit jeweils einer Kollimationsoptik zum Einstellen des Gesichtsfeldes jeder der genannten Quellen auf das der Eingangsoptik der Kamera besteht, dadurch gekennzeichnet, daß die Elementarquellen sich gleichmäßig verteilt ringförmig um die Pupille der Eingangsoptik herum befinden, wobei das von der Kollimationsoptik jeder der Quellen ausgehende Lichtbündel über einen gegenüber jeder Quelle liegenden Umlenkspiegel auf einen die Pupille der Eingangsoptik umgebenden Facettenspiegel fokussiert, der soviele Facetten enthält wie Lichtquellen, wobei jede Facette um einen solchen Winkel geneigt ist, daß die Richtung des reflektierten Strahlenbündels mit der Richtung des Gesichtsfeldes der Kamera gleich verläuft, so daß die von diesen Spiegelfacetten ausgehenden Lichtbündel um die gesamte optische Achse der Kamera herum quasi überlagert sind.

2. Kamera nach Anspruch 1, dadurch gekennzeichnet, daß die genannten Elementarquellen von kontinuierlichen Diodenlasern oder von gepulsten Diodenlasern gebildet werden.

3. Kamera nach den Ansprüchen 1 und 2, dadurch gekennzeichnet, daß keines der von den Elementarquellen ausgehenden Strahlenbündel die Eingangsoptik der Kamera durchläuft.

4. Kamera nach den Ansprüchen 1 bis 3, dadurch gekennzeichnet, daß das Beleuchtungsniveau durch Verwendung von 1 bis N Elementarquellen moduliert werden kann.

FIG.1

FIG.2